# NEW EUROPEAN PATENT SPECIFICATION

(11) **EP 1 055 338 B2**
(45) Date of publication and mention of the opposition decision: **11.11.2009**
(45) Mention of the grant of the patent: 26.10.2005
(21) Application number: 99902581.0
(22) Date of filing: 09.02.1999
(51) Int. Cl.: H04W 8/22

(54) **DATA TRANSMISSION BETWEEN COMMUNICATION DEVICES IN A MULTIMEDIA SYSTEM**
DATENÜBERTRAGUNG ZWISCHEN KOMMUNIKATIONSGERÄTEN IN EINEM MULTIMEDIASYSTEM
TRANSMISSION DE DONNEES ENTRE DISPOSITIFS DE COMMUNICATION DANS UN SYSTEME MULTIMEDIA

(30) Priority: 12.02.1998 FI 980316
(43) Date of publication of application: 29.11.2000
(73) Proprietor: Nokia Corporation, 02150 Espoo (FI)
(72) Inventor: HÄMÄLÄINEN, Jari, FIN-36100 Kangasala (FI); PASANEN, Jari, FIN-33610 Tampere (FI)
(74) Representative: Pursiainen, Timo Pekka
(86) International application number: PCT/FI1999/000094
(87) International publication number: WO 1999/041920

(56) References cited:
- JP-A- 6 037 845
- US-A- 5 268 904
- US-A- 5 287 547
- US-A- 5 379 298
- US-A- 5 497 373
- US-A- 5 659 692
- US-A- 5 699 361
- MOULY M.; PAUTET M.-B.: 'GSM SYSTEM FOR MOBILE COMMUNICATIONS. COMPREHENSIVE OVERVIEW OF THE EUROPEAN DIGITAL CELLULAR SYSTEMS, pages 379-381', 1992
- MEYER: 'The On-The-Move concept for mobile middleware' ISS'97: WORLD TELECOMMUNICATIONS CONGRESS. GLOBAL NETWORK EVOLUTION: CONVERGENCE OR COLLISION? PROCEEDINGS VOL PART VOL.2 vol. VOL.2, 1997, ERICSSON EUROLAB DEUTSCHLAND GMBH - GERMANY, ISSN IEIEIEIE pages 372 - 379
- BOLOT ET AL.: 'Scalable Feedback Control for Multicast Video Distribution in the Internet' 1994, ACM, pages 58 - 67
- S. CHEUNG ET AL.: 'On the use of Destination Set Grouping to Improve Fairness in Multicast Video Distribution*' 1996, IEE 1996, pages 553 - 560
- N. CHADDHA ET AL.: 'An End to End Software Only Scalable Video Delivery System' PROCEEDINGS OF THE 5TH INTERNATIONAL CONFERENCE ON NETWORK AND OPERATING SYSTEM SUPPORT FOR DIGITAL AUDIO AND VIDEO April 1995, DURHAM, NH, pages 1 - 12

## Description

The present invention relates to a system in data transmission between communication devices in a communication network as set forth in the preamble of claim 1. The present invention relates also to a mobile station as set forth in the preamble of claim 10. Further, the present invention relates to a communication device as set forth in the preamble of claim 11.

The number of mobile stations, such as mobile terminals and particularly personal portable mobile phones in use has constantly increased. These devices operate in a modern public land mobile network (PLMN) based on a cellular network, such as the standardised GSM system (Global System for Mobile Communications) as well as the GSM 1800 and PCS 1900 systems. Also, network operators endeavour to develop their services offered to users of mobile stations. Such a service is *e*.g. the providing of data transmission connections to services of not only a public switched telephone network (PSTN) but also a general packet data network (PDN) and an integrated services digital network (ISDN). By using these data transmission connections, *e.g.* providers of services in the INTERNET network can develop their services to users of mobile stations, such as mobile phones and portable personal computers (PC) that can be coupled to them *e*.g. by means of PCMCIA cards.

The increased use of multimedia applications sets demands on not only the PSTN network but also particularly to systems of wireless communication networks, such as the PLMN network. Thus, the systems must be applicable to the transmission of not only text and data but also graphics, audio and moving images. Applications include video negotiations, real-time transmission of video images in connection with medical examinations, transmission of high-resolution images, communication in INTRANET networks of enterprises, interactive games, and transmission of music. These applications are particularly characterised by their demand of a connection with a communication capacity that is sufficiently quick also momentarily between the communication devices in the communication network, and by the fact that the data transmission is often conducted in short sequences.

For example in the GSM system, data transmission between communication devices, such as a mobile station and a base stations, on one logical radio channel is conducted at the rate of 9.6 kbit/s. Also a high speed circuit switched data (HSCSD) service has been developed for the GSM system, where the data transmission capacity is as high as 64 kbit/s. Thus, this service uses all the eight logical radio channels of the physical radio channel for data transmission between the mobile station and the base station. In this way, the user of the mobile station can be offered digital services to the ISDN network and the communication devices of its service providers at a rate of 64 kbit/s. Another system based on the GSM system is the general packet radio service GPRS system. This system improves the efficiency of communication, because the same logical radio channel can be used by several different mobile subscribers. For example, data transmission between a mobile station and a base station takes place only when necessary, and the logical radio channel is not reserved for communication between only one mobile station and base station. There is so-called virtual data transmission connection between the mobile station and the GPRS system. The data transmission capacity of the current GPRS system on one logical radio channel is as high as 21 kbit/s, and as high as 171 kbit/s when all the logical radio channels are used. Future systems supporting wireless multimedia include the wide-band UMTS system (Universal Mobile Telecommunications System) aiming at high speed which can momentarily be even several Mbit/s.

For using multimedia services, a communication device, such as a mobile station, sets up a data transmission connection with a PLMN network and the server of the communication device of this network providing the multimedia services. Such a service may be a message service, which indicates the short message transmission service (SMS) as well as the paging service. The communication device with its server can also be located in another PLMN network.

All the communication devices of a communication network, such as the mobile stations connected with a PLMN network, do not have such properties that they would support *e.g.* faster data transmission connections or data transmission in packet form. However, it must be possible to use also devices of older generations and with limited options in a communication network supporting communication devices with more varied options. Consequently, the network connects simultaneously conventional mobile phones which, in addition to transmission of speech, support only data transmission in text form, such as SMS messages, and wireless communication devices with which it is possible to use *e.g.* services of the INTERNET network. One wireless communication device with varied properties is Nokia Communicator 9000, in which the properties of a cellular mobile telephone (CMT) and a personal digital assistant (PDA) are combined. Wireless communication devices that can be applied for the use of future multimedia, *i.e.* multimedia communication devices, are suitable for the reception of graphics, audio as well as moving images. Communication devices that can be connected to the PSTN network and are under development include for example telephones transmitting calls via the INTERNET network, which transmit also video images.

Document US-A-5497373 relates to providing multimedia messaging services over various types of communication networks to remote subscribers having diverse analog and digital communication equipment. To provide these messaging services, different types of communication media from different types of communication equipment and processing protocols must be interfaced to a single host system or messaging center that provides the messaging services. The document discloses an interface via which multimedia information can be transmitted. The multimedia interface performs the necessary protocol conversions of the information received in various telecommunication formats. The aim of the protocol conversion is to make data transfer possible, not to modify the actual multimedia information.

Document US-A-5379298, relates to a multimedia multiplexer device having automatic parameter recognizing and setting function and enables the coupling of different communication devices to the multiplexing device, thus making it possible to transfer information in a flexible and reliable manner. The parameters to be signalled are transmission parameters of the data transmission, for example bit rate, coding method and frame structure. The parameters of the devices have to match in a known manner in order to make the transmission of actual information possible.

One problem with the prior art is that the communication devices of service providers in a communication network do not know all the properties of the receiving communication device. Thus, for example a server offering multimedia services may transmit information to a mobile station, a communicator or a wireless multimedia communication device in a form that is not compatible with the device, or the information cannot be received at all. Thus, for example, the precision, *i.e.* resolution of the graphics to be transmitted may be too high for the reproduction capacity of the display of the receiving device; the moving video image or image information to be transmitted is coded in a form that is not recognised by the receiving device; or the interactive application contains *e.g.* a form to be filled in but entering data is not possible with the receiving device. However, if data transmission is conducted in spite of the above-mentioned problems of prior art, this will result in a waste of capacity available in the communication network. The problems of the receiving device, due to incompatibility, will lead to failure situations or delays in the network, which load or hamper other communication in the network. If the multimedia service is available only in a receiving communication device with certain options, this will have the result that either the user of the device will not receive the desired services, the device must be replaced with a suitable one, or several devices must be acquired for using different services.

The purpose of the present invention is to eliminate the drawbacks of prior art and to achieve a considerable improvement in data transmission between communication devices in a communication network. More precisely, the method of the invention is characterised in what will be presented in the characterising part of claim 1. The mobile station of the invention is characterised in what will be presented in the characterising part of claim 10. The communication device of the invention is characterised in what will be presented in the characterising part of claim 11.

The essential principle of the invention is that multimedia information is transmitted *e.g.* from a server offering multimedia services to another communication device, such as a mobile phone, communicator or multimedia communication device, only in a form in which the receiving communication device can utilise it. For this purpose, the method of the invention is created *e.g.* for transmitting parameter data describing the multimedia properties of a multimedia communication device and for modifying multimedia information for this multimedia communication device. In the following, the invention will be described in more detail by using several examples for implementing the method in a communication network.

The invention gives several considerable advantages related to the operation of the communication network, such as a PLMN network, as well as advantages obtained by the mobile subscriber. The most important advantage is that by using the method of the invention, it is possible to improve the efficiency of data transmission between communication devices so that the properties of the receiving device, such as a wireless multimedia communication device, are taken into account in data transmission in a wider manner than in prior art. Thus, the capacity of the communication network is not wasted unnecessarily, whereby the data transmission is optimised almost according to each subscriber. Another advantage is that the communication network supports devices of different options, whereby also the time of use of mobile stations is prolonged and their possibilities of use are improved. Moreover, the problems of incompatibility of devices in the communication network are reduced, and error situations and delays loading the communication network are reduced in view of prior art.

In the following, the invention will be described in more detail with reference to the appended drawings, in which
- Fig. 1: is a schematic view showing a general mobile communication network based on a cellular network,
- Fig. 2: shows a mobile station that can be used in the mobile communication network shown in Fig. 1,
- Fig. 3: is a schematic view illustrating the transmission of parameter data describing the multimedia properties of a mobile station during setting up of a call by using an advantageous embodiment of the method of the invention, and
- Fig. 4: is a schematic view illustrating the transmission of parameter data describing the multimedia properties of a mobile station during setting up of a call by using another advantageous embodiment of the method of the invention.

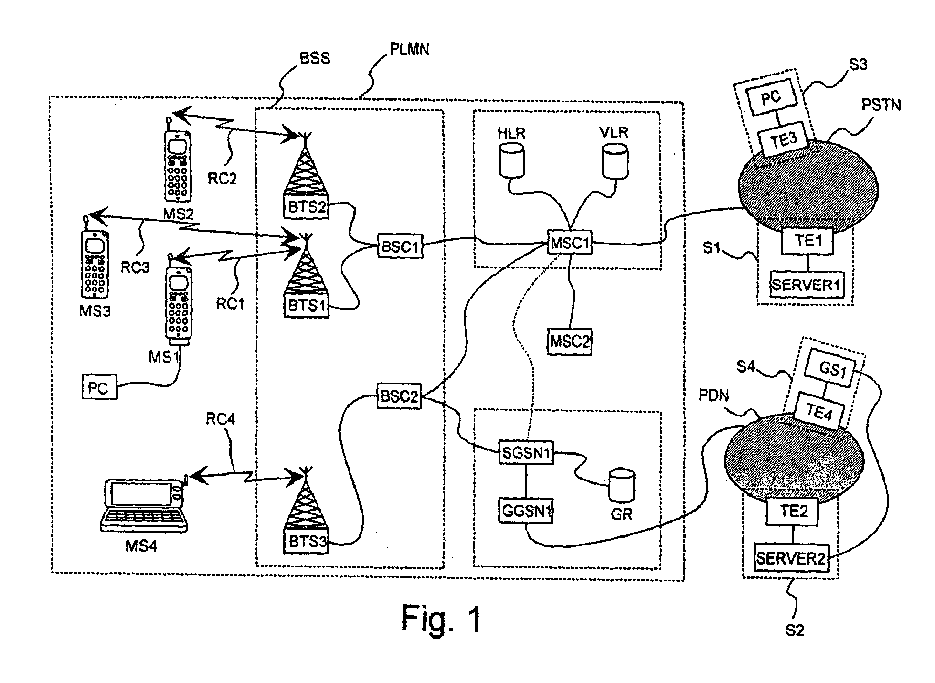

As shown in Fig. 1, the public land mobile network (PLMN) based on a cellular network, such as the GSM system, comprises, in a known manner, several communication devices, such as mobile stations (MS) MS1-MS4 and a base station subsystem BSS. This base station subsystem comprises usually several base transceiver stations (BTS) BTS1, BTS2 and BTS3 which are distributed into a geographical area and each base transceiver station serves a cell comprising at least part of this geographical area. Communication, such as transmission and reception of speech and data, between a mobile station MS1 located in the area of the cell served by the base transceiver station BTS1, and the base transceiver station BTS1 takes place via radio communication RC1 by using radio channels reserved for the cell. The operation of the base transceiver stations BTS1 and BTS2 is controlled by a base station controller (BSC) BSC1 belonging to the base station subsystem BSS and serving the purpose of controlling the use of radio channels and controlling channel changes. The base station controller BSC1 communicates with a mobile services switching centre (MSC) MSC1 which serves the purpose of transmitting connections between the base transceiver stations BTS1-BTS3 coupled therewith, to other mobile services switching centres, such as MSC2, a public switched telephone network PSTN, and further via the PSTN network to its communication devices, such as a communication device S1. The communication device comprises for example a telecommunication terminal, such as a modem TE1, and a data processor, such as a computer used as a server SERVER1. The communication devices of the PSTN network have usually their own telephone number, and in the data transmission connection set up, data transmission of the PSTN network takes place *e.g.* by means of frequency shift keying (FSK) modulation or dual tone multi-frequency (DTMF) control of modems. In the communication device S1, data transmission and applications, such as the communication software, are controlled by the control software of the communication device S1, whereby this control software can be used for transmitting data *e.g.* between the modem TE1 and the computer used as a server SERVER1. For illustrating the invention, Fig. 1 shows only the mobile stations MS1-MS4 and the base transceiver stations BTS1-BTS3, but in a known manner, the system comprises usually a large number of mobile stations as well as base transceiver stations serving the same. The system usually comprises also more than two mobile services switching centres MSC1 and MSC2. Moreover, a PSTN network comprises several communication devices that can be coupled with it via different telephone operators.

Further, with reference to Fig. 1, the mobile services switching centre MSC1 maintains information on the location of the mobile stations MS1-MS4 in the area of cells of the base transceiver stations BTS1-BTS3 by means of a home location register HLR and a visitor location register VLR. These registers HLR and VLR contain for instance the telephone number and the international mobile subscriber number (IMSI) of the mobile station. The home register HLR contains information on mobile stations registered in the mobile services switching centre MSC1 and their locations. The visitor location register VLR contains information on the mobile stations which are temporarily registered in the mobile services switching centre MSC1. Different mobile services switching centres exchange this information for maintaining data transmission in a mobile communication network.

With reference to Fig. 1, if the public land mobile network PLMN based on a cellular network and its communication devices, such as mobile stations MS1-MS4, are compatible with the GSM GPRS system, the network comprises also at least one serving GPRS support node SGSN1, communicating with a base station controller, such as the base station controller BSC2, as well as a gateway GPRS support node GGSN1 communicating with the same. The support node GGSN1 is the support node which the general packet data network PDN communicates with. Communication devices in this PDN network, such as the communication device S2, comprise a telecommunication terminal, such as a modem TE2, and a data processor, such as a computer used as a server SERVER2. The support node GGSN1 contains information for addressing the protocol data units (PDU) entering from the PDN network to the serving GPRS support node which the communication device, such as mobile station MS4, communicates with. These data packets comply with the protocol definition of the data transmission connection, such as the Internet protocol (IP), X.25 or CLNP, and they contain also the address of the destination communication device. The support nodes can support several protocol definitions for connections of a landline PDN network, and they are usually selected by the network operator. The support nodes GGSN1 and SGSN1 can also be located in the same device. The GPRS register GR contains information about mobile stations registered in the support node GGSN1, such as their IMSI identifications and addresses for addressing the PDU data packets in the network. The serving GPRS support node usually communicates also with the mobile services switching centre, such as the support node SGSN1 with the mobile services switching centre MSC1 according to Fig. 1, for making data exchange possible. The mobile services switching centre MSC1 transmits *e.g.* information on mobile stations registered therein to the support node SGSN1.

Of the existing frequency range for radio connections, only an allocated frequency band is available to the mobile communication network, and further, as shown in Fig. 1, part of this is used by the radio channel intended for communication between the base station BTS1 and the mobile station MS1 by means of radio communication RC1. Usually, there are several radio channels available for use by the base transceiver station BTS1 for communication between several mobile stations MS1 and MS3 and the base transceiver station BTS1. For example in the digital GSM system, there are 124 radio channels available, with a difference of 200 kHz. In analog frequency division multiple access (FDMA) systems of prior art, such as AMPS (Advanced Mobile Phone Service) and NMT (Nordic Mobile Telephone), the above-described system is used, whereby each radio channel is allocated its own frequency band, *i.e*. a so-called physical radio channel is formed.

The physical radio channel is further divided in the time domain into logical radio channels, whereby each logical radio channel is allocated its own time span in the time domain. Thanks to this arrangement, the same physical radio channel can be used in data transmission between several mobile stations, such as the mobile stations MS1 and MS3 and the base transceiver station BTS1 in Fig. 1. In digital time division multiple access (TDMA) systems of prior art, such as D-AMPS, GSM and JDC/PDC, the above-described system is used for dividing a physical radio channel in the time domain into logical radio channels. For example in the digital GSM system, the physical radio channel is divided into eight logical radio channels. Usually also the logical radio channels are further divided into traffic channels (TCH) which are used for the transmission of *e.g.* speech and data, and control channels which are used for the transmission of messages of the network and messages for maintaining the network and the radio channels. An example of a control channel is the common control channel CCCH.

Other communication systems include digital code division multiple access CDMA systems, such as the present IS-95 and future wideband code division multiple access (WCDMA) systems.

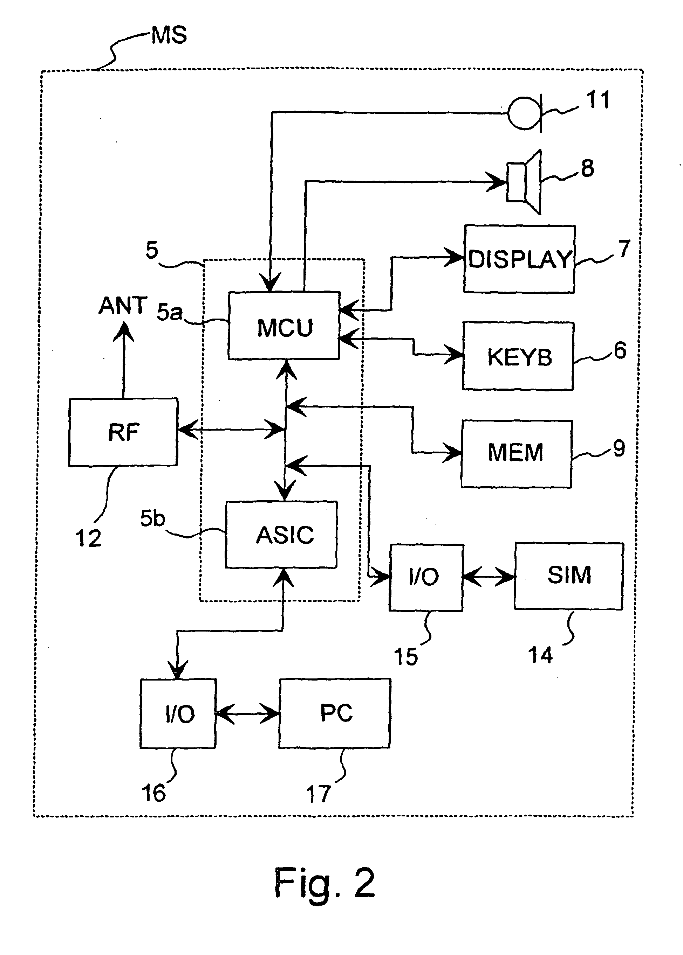

Figure 2 is a reduced block chart showing the mobile station MS available for use in the system of Fig. 1. The block chart shows primarily the blocks which are important for disclosing the present invention. It is obvious that the mobile station of the sender, such as the mobile station MS1 shown in Fig. 1, and the mobile station of the recipient, such as the communicator MS4 shown in Fig. 1, are not necessarily similar to each other. The control unit 5 consists of *e.g*. a micro controller unit 5a (MCU) and an application specific integrated circuit 5b (ASIC). Further, the mobile station MS contains a keypad 6, a display 7, an ear piece 8, a microphone 11, memory means 9 consisting *e.g.* a non-volatile read-only memory (ROM) for storing programs and a random access memory (RAM) for storing information during the operation of the mobile station MS. More, the mobile station MS comprises a radio part 2 with the necessary means for setting up a connection and transmitting information between the mobile station MS and the mobile communication network. Figure 2 shows also a SIM card 14 and means 15 for connecting the SIM card to the mobile station MS. The mobile station MS, usually a mobile phone, can also be used in connection with a data processor 17, such as a PC device or a PDA device, as a so-called wireless modem. Thus the mobile station MS comprises also means 16 for connecting the data processor 17 with the mobile station MS. The data processor 17 is used for setting up a data transmission connection by means of the mobile station MS and the mobile communication network to another communication device, such as the mobile station MS2 or the communication device S1 formed by a modem TE1 and a computer SERVER1 in Fig. 1. With reference to Fig. 1, for example the mobile stations MS1-MS4 operating in the GSM system must have at least one SIM module (subscriber identity module) containing also a memory for storing subscriber-specific identification data of the mobile subscriber of the mobile station. This identification data includes the IMSI identification and the telephone number of the mobile subscriber. Also, messages transmitted by the short message services (SMS) of the mobile communication network can be stored in the memory of the SIM module. Moreover, the address of the visitor location register (VLR) for maintaining the information on the mobile station can be temporarily stored in the SIM module. By means of the subscriber-specific identification data, messages and calls from other mobile stations or a public land telephone network can be addressed to the correct mobile station. The operation of the mobile station is prior art to a man skilled in the art, whereby its disclosure in more detail will be rendered unnecessary in this context.

The method of the present invention can be applied in presently available mobile stations in a way that the operations of the method to be carried out in the mobile station are conducted in the operational software of the mobile station. Thus, no changes will be needed in the hardware of the mobile station. The values of the parameters describing the multimedia properties of the mobile station can be stored *e.g*. on the SIM card, from which they are read, when necessary, by the operational software of the mobile station to be transmitted to the communication network. The values of the parameters can be located also in the ROM or RAM memory of the mobile station. Application of the method will also require changes in the communication network, for example in the operational software of the mobile services switching centre.

According to known technology, there are so-called communication protocol definitions, such as IP and X.25, by means of which terminal devices can agree on *e.g.* the transmission rate to be used. From the PLMN network, it is known to use standardised communication between the mobile station and the base transceiver station, such as the CLASSMARK_ENQUIRY message of the GSM system and the ATTACH_REQUEST message of the GPRS system. These messages are intended for adaptation of the mutual operation of the terminal devices of the network and for setting up a data transmission connection, which is intended only for transmission of data to be conveyed. By means of the protocol definition, it is secured that the data is transmitted correctly from the source host to the destination host. By means of the data transmission connection set up, however, the actual data to be transmitted between *e.g.* application software of communication devices is not optimised on the basis of this information, *e.g.* for reducing the resolution of graphics to be transmitted or for changing the coding of a video image to be transmitted. It is the purpose of the method according to the invention to provide a way for transmitting this information from a mobile station *e.g.* to the data processor of a communication device producing multimedia services.

In the following, the application of the method of the invention will be described in detail in mobile communication networks complying with the GSM GPRS and the GSM standards, but it will be appreciated by a man skilled in the art that the method can be applied in also other mobile communication networks based on a cellular network within the scope of the claims.

Properties of the receiving communication device, such as a mobile phone, communicator or multimedia communication device, affecting the use of above-mentioned multimedia services include for example:
- parameters MM1 (*e.g.* resolution) of the display of the communication device,
- image coding methods supported by the communication device, and their parameters MM2,
- audio coding methods supported by the communication device, and their parameters MM3,
- service-specific data transmission rate MM5,
- service-specific data transmission mode MM6 (*e.g*. SMS, HSCSD, GPRS),
- maximum data transmission rate MM7 of the data transmission mode,
- maximum size MM8 of the graphic files,
- number MM9 of colours of the graphics,
- properties MM10 of the keypad of the data transmission device, and
- properties MM11 of the control device (*e.g*. mouse, pointer ball, joystick) of the communication device,
- INTERNET presentation modes MM12 *(e.g.* Java, HTML versions) supported by the communication device.

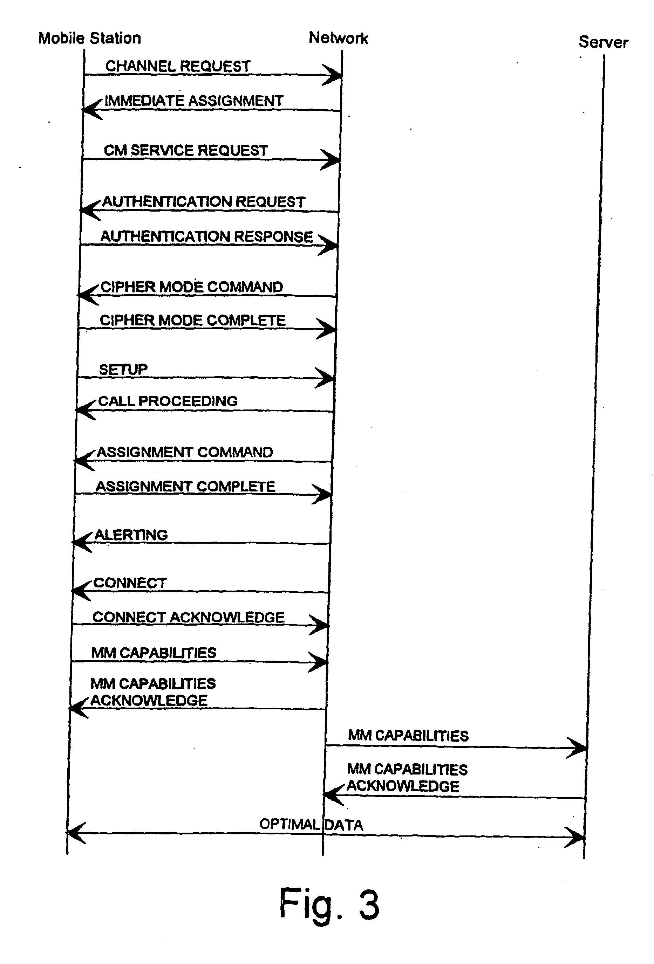

As shown in Fig. 3, a mobile originated call is set up in a mobile communication network complying with the GSM standard according to prior art so that the mobile station and the GSM network communicate, *i.e.* transmit the control and identification data required for call set-up. In response to a call set-up request, the mobile station is allotted a radio channel for signalling, if this is possible within the capacity of the network. On this channel, the mobile station requests (CM_SERVICE_ REQUEST) for desired speech or data service from the network. On the network side, this request is transmitted via a base transceiver station to a mobile services switching centre, where the rights of the mobile subscriber in question are found out from the visitor location register. In a SETUP message, the mobile station gives the telephone number to which it wants a connection. This telephone number can belong *e.g.* to a communication device offering multimedia services, located also in the same PLMN network, a PSTN network or a PDN network. The network starts a routing process for setting up a connection to the address given in the telephone number (CALL_ PROCEEDING). When successful, a connection is set up (CONNECT_ ACKNOWLEDGE) and data transmission can be started on the radio channel reserved for it.

According to a first advantageous embodiment of the method of the invention, the mobile station transmits on the radio channel a message (MM_CAPABILITIES) consisting of the parameters MM1-MM12 describing the multimedia properties of the mobile station to the mobile services switching centre which acknowledges the receipt of this data (MM_CAPABILITIES_ACKNOWLEDGE). For this purpose, the required determined messages are created between the mobile station and the mobile services switching centre. The mobile services switching centre transmits the message (MM_CAPABILITIES) consisting of the parameters MM1-MM12 describing the multimedia properties of the mobile station further to the communication device, which also acknowledges the receipt of this data (MM_CAPABILITIES_ACKNOWLEDGE). For this purpose, a protocol definition, such as IP or X.25, is made between the mobile services switching centre and the communication device. It is obvious that the messages used for transmitting the parameters and the acknowledgements on the receipt of the messages can vary in their contents depending on whether the messages were transmitted between the mobile station and the mobile services switching centre or between the mobile services switching centre and the communication device. On the basis of the received data, the server of the communication device conducts optimisation of the data to be transmitted to correspond to the multimedia properties of the mobile station, after which optimised data transmission can be started (OPTIMAL_DATA). The communication device is advantageously coupled directly with the mobile service switching centre of the PLMN network. Data transmission takes place preferably by using a radio connection between the mobile station and the mobile services switching centre. However, the method can be easily implemented in also other mobile communication networks, such as the D-AMPS and JDC/PDC cellular networks.

According to the method of the invention, for optimisation of the data to be transmitted from the server, for example high resolution of a graphic file is reduced to a level that can be displayed in the display of a wireless multimedia communication device. Thus, when transmitting a graphic file, it is also possible to convert the original coding of the image, *e.g.* GIF, JPEG or TIFF, into another way of coding, whereby the data transmission connection is used as efficiently as possible, it can be reproduced by the display device of the destination communication device, or the coding can be interpreted by the communication device with its application software. It is often possible to reduce the resolution of an image without hampering the interpretation of the information in the image. By selection of the coding, it is also possible to affect the graphic file to be transmitted, whereby smaller files can be transmitted faster. In another example, the transmission rate, as well as resolution, of a video image stored in the server can be adapted to better correspond *e.g.* to the reproduction capacity of the mobile station or to the capacity of the data transmission connection, *e.g.* a radio connection. This takes place for example by re-coding and pre-processing of the video image to be transmitted, which can be conducted also in connection with transmission of a real-time video image, such as a video negotiation. The original coding, such as MPEG, can be converted. Thus, the video image to be transmitted is re-coded to suit the way of transmission of the communication, for example the HSCSD service or the GSM GPRS network. In a further example, the server can take into account the properties of the input means of the receiving communication device, such as the properties of the keypad and the properties of the control device, such as a mouse, joystick or pointer ball, or their possible lack in the device. Thus a form to be transmitted, such as an INTERNET page or an entry page of spreadsheet computation software, can be transmitted to the device in a suitable form. Also, the properties of the receiving device must be taken into account *e.g.* in a case that the device supports only a certain presentation protocol, such as a certain HTML version. It is particularly important to take into account the properties of the device when loadable program codes are used, such as Java.

With reference to Fig. 3, for setting up the above-described mobile originated call or data transmission connection in a mobile communication network of the GSM standard, the mobile station sends the network a CM_SERVICE_REQUEST message for starting the desired speech or data service. These include a connection to a communication device of the PSTN network or transmission of a short message. Next, the identification data of the mobile station is checked (AUTHENTICATION), and the mobile station gives required control data (SETUP). The CM_SERVICE_REQUEST message transmitted by the mobile station contains also a CLASSMARK_2 information element for the purpose of transmitting information from the mobile station in parameter form. The information element comprises predetermined sequences of zeros and ones to be transmitted to describe the values of the parameters. On the basis of the service requested by the mobile station, the network can ask the mobile station for additional information required, by means of a CLASSMARK_ENQUIRY message, whereby the mobile station transmits a CLASSMARK_2 and, if required, also a CLASSMARK_3 information element by means of a CLASSMARK_CHANGE message. The information elements contain *e.g.* information on encryption algorithms and the operation of the mobile station in different frequency ranges (GSM 900, GSM 1800 and GSM 1900).

According to a second advantageous embodiment of the method of the invention, a new information element CLASSMARK_4 is created which contains information on the multimedia properties of the mobile station, such as the parameters MM1-MM12. The CLASSMARK_4 information element is transmitted, if necessary, as a response to the CLASSMARK_ENQUIRY message transmitted by the network. On the basis of the information received, the mobile services switching centre transmits the information to the communication device offering multimedia services, which may be located also in the same PLMN network. For transmitting data to this communication device, the mobile services switching centre uses *e.g.* the protocol definitions of computer-controlled telephone services, *i.e.* an intelligent network (IN). The mobile services switching centre transmits a parameter message (MM_CAPABILITIES) consisting of the parameters MM1-MM12 describing the multimedia properties of the mobile station, to the communication device which acknowledges the receipt of this information (MM_CAPABILITIES_ACKNOWLEDGE). On the basis of this information, the server of the communication device optimises the data to be transmitted to correspond to the multimedia properties of the mobile station, after which optimised data transmission can be started (OPTIMAL_DATA). The communication device communicates advantageously directly with the mobile services switching centre of the PLMN network.

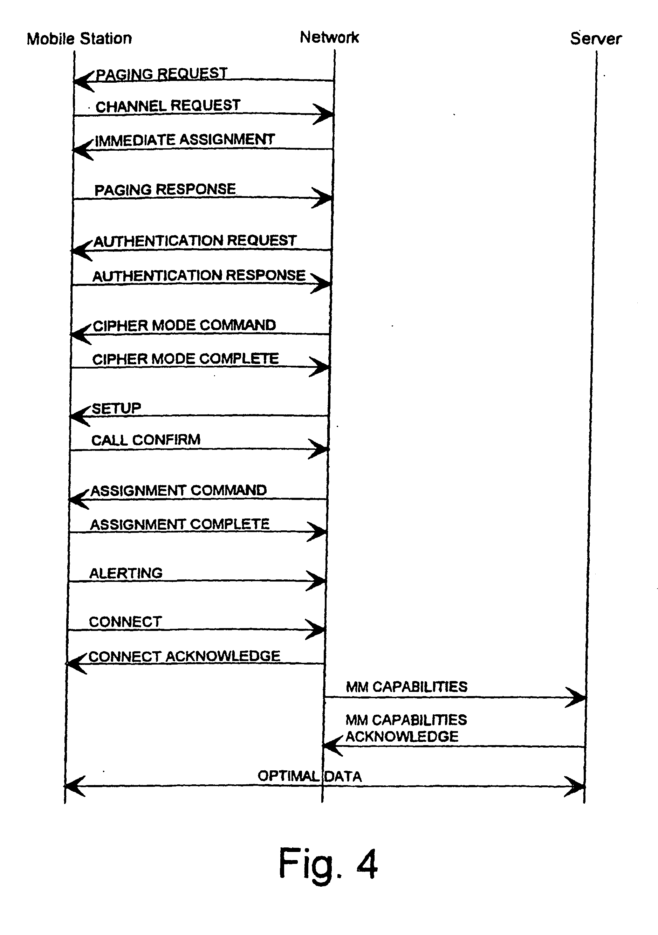

As shown in Fig. 4, upon a mobile terminated (MT) call from *e.g.* a telephone of the PSTN network, the operator of the telephone network transmits *e.g.* the number of the addressee mobile phone to the mobile services switching centre. The mobile services switching centre retrieves the rights of the mobile subscriber in question from the home location register and the visitor location register. After this, the mobile communication network and the mobile station transmit control and identification data required for call set-up. For setting up a connection, the network of the GSM standard transmits a PAGING_REQUEST message to the mobile station which responds by transmitting a PAGING_RESPONSE message to the base transceiver station, for setting up a data transmission connection, if the mobile station has the sufficient rights for this. This message contains also the CLASSMARK_2 information element of the mobile station, for the purpose of transmitting information from the mobile station.

According to a third advantageous embodiment of the method of the invention, as already disclosed in connection with the mobile-initiated call, a new information element CLASSMARK_4 is generated, containing the parameter data MM1-MM12 on the multimedia properties of the mobile station. If necessary, this data can be contained also in the CLASSMARK_2 and CLASSMARK_3 information elements, if there are free spaces available in them to be used for this parameter data MM1-MM12. For transmission of information to the communication device of the PSTN network and for communication (MM_CAPABILITIES, MM_CAPABILITIES_ACKNOWLEDGE), the mobile services switching centre uses *e.g*. the protocol definitions of computer-controlled telephone services, *i.e*. an intelligent network. On the basis of the information, the server conducts optimisation of the data to be transmitted, to correspond to the multimedia properties of the mobile station, after which optimised data transmission can be started (OPTIMAL_DATA).

The purpose of registering the mobile station in a mobile communication network, such as the GSM GPRS network, is to find out the location of the mobile station in the PLMN network by means of the identification data, such as the IMSI identification. This is necessary for correct routing of the data packets addressed to the mobile station, for example for addressing PDU data packets from a PDN network to a GPRS support node SGSN1 serving the mobile station. In connection with the registration, the network can also be informed of the rights and properties of the mobile station. Upon its registration in the GPRS network, the mobile station transmits an ATTACH_REQUEST message to the network, containing also the MS_CLASSMARK_2 information element presented above. In the GPRS network, this information element contains also information about the class of the mobile station and its capability to support data transmission on several logical radio channels simultaneously.

According to a fourth advantageous embodiment of the method of the invention, a new information element CLASSMARK_4 is created, containing the parameter data MM1-MM12 on the above-mentioned multimedia properties of the mobile station. If necessary, this information can be contained also in the CLASSMARK_2 and CLASSMARK_3 information elements, if they have free space available for use by this parameter data. When the serving GPRS support node receives information on the multimedia properties of the mobile station, it can communicate (MM_CAPABILITIES, MM_CAPABILITIES_ACKNOWLEDGE) and transmit this information by means of the protocol definitions of the intelligent network or the IP protocol definition to the server of the PLMN network or PSTN network, or by means of the signalling procedure SS7/MAP to the server of the ISDN network where the multimedia services are available. On the basis of this information, the server optimises the data to be transmitted, to correspond to the multimedia properties of the mobile station, after which optimised data transmission can be started (OPTIMAL_DATA). The server communicates advantageously directly with the support node of the PLMN network serving the mobile station.

The GSM GPRS system also comprises a procedure for transmitting an ACTIVATE_PDP_CONTEXT_REQUEST message from the mobile station to the serving GPRS support node, by means of which message the desired protocol definition can be activated for use in data transmission between them. The communication device offering multimedia services can communicate with the GPRS support node of the gateway directly or *e.g.* via the PDN network.

According to a fifth advantageous embodiment of the method of the invention, a separate protocol definition, such as IP or X.25, is made between the mobile station and the server for transmitting parameters describing the multimedia properties between the mobile station and the server, *e.g.* by means of MM_CAPABILITIES and MM_ CAPABILITIES_ACKNOWLEDGE messages. On the basis of the information received, the server optimises the data to be transmitted to correspond to the multimedia properties of the mobile station, after which optimised data transmission can be started.

The mobile service switching centre maintains information on the mobile stations registered in it, such as their IMSI identifications. According to a sixth advantageous embodiment of the method of the invention, parameters describing the multimedia properties of the mobile station are stored in the mobile services switching centre, for example in the home location register or in the visitor location register. In connection with a mobile-originated call, the mobile services switching centre retrieves this data from its registers and transmits it to the server offering multimedia services in any way described earlier in this specification, *e.g.* with the MM_CAPABILITIES and MM_CAPABILITIES_ACKNOWLEDGE messages, as shown in Fig. 3 or Fig. 4. Thus, the mobile station does not need to transmit the parameter data to the mobile services switching centre in connection with each call. Moreover, the parameter data needs to be transmitted to the server only in a case that the server in question is a server transmitting multimedia services or the server inquires this parameter data *e.g.* by using the protocol definitions of the intelligent network or the IP protocol definitions. If necessary, the mobile services switching centre asks the mobile station for this parameter data *e.g.* in the above-described way by means of a CLASSMARK_ENQUIRY message, which can take place *e.g.* when the mobile station is registered in the mobile services switching centre. After transmission of the parameter data, optimised data transmission can be started.

In accordance with a seventh advantageous embodiment of the invention, the above-mentioned parameter data can be transmitted from the mobile services switching centre to the server also upon a mobile-terminated call. Thus, the server offering multimedia services contacts the mobile services switching centre for setting up a data transmission connection with the mobile station, relating to *e.g.* a service ordered earlier by the mobile subscriber. In the mobile services switching centre in question, also the parameter data of the mobile station is stored, and this parameter data is transmitted to the server in a way presented above. The above-mentioned advantageous embodiments of the invention have the advantage that data transmission between the mobile station and the mobile services switching centre is reduced. The parameters relating to mobile stations can be stored in the mobile services switching centre also in a case that the server is located in the PDN network, as shown in Fig. 1. When the serving GPRS support node communicates also with the mobile services switching centre, the parameter data can be retrieved there and transmitted to the server. In addition to the mobile services switching centre, the parameter data can be stored also in the GPRS register of the support node.

According to an advantageous embodiment of the method of the invention, the parameter data relating to the mobile stations can be stored also in the communication device offering multimedia services. It is an advantage of the embodiment in question that data transmission is reduced also between the mobile services switching centre and the communication device. If necessary, the communication device inquires the mobile services switching centre for the parameter data of the mobile station, if this is stored in the mobile services switching centre. The mobile services switching centre can further inquire the mobile station for the necessary parameter data *i.e*. by means of the above-described messages.

The parameter data describing the multimedia properties of the mobile station may be changed *e.g.* as a result of updating the functional program of the wireless multimedia communication device, changes made in the device, or connecting other auxiliary devices with the device. Thus, it is obvious that the parameter data is changed to correspond to the properties of the device and stored in the mobile station. According to an advantageous embodiment of the method of the invention, the communication network is informed of the change made, for example by means of a CLASSMARK_CHANGE message transmitted by the mobile station. The parameter data can be transmitted, as presented earlier, by means of CLASSMARK information elements, or the CLASSMARK_CHANGE message is used by the mobile station only to indicate that the parameter data is changed, after which the mobile services switching centre inquires the mobile station for the parameter data by means of another message agreed upon, *e.g.* a CLASSMARK_ENQUIRY message. Consequently, the CLASSMARK_ CHANGE message can be used for transmitting parameter data to the communication network.

The method of the invention can be applied also in the case that the server offering services receives the graphic, video, text, audio and data files to be transmitted to a communication device, such as a mobile station, further from another communication device in connection with the server, comprising *e.g.* a telecommunication terminal and a data processor and not conducting optimisation. Thus, the transmitting server can conduct the necessary optimisation before transmitting the files *e.g.* to a mobile station. Thus it is obvious that the transmitting server used can be a communication device communicating in the GSM GPRS system directly with the gateway GPRS support node, with its server, or a communication device communicating with the mobile services switching centre, with its server.

According to the example described above, and with reference to Fig. 1, the transmitting communication device used is a communication device S4 comprising a telecommunication terminal TE4 and a data processor GS1. This communication device S4 can also be used as a gateway server S4, wherein, according to Fig. 1, for example the communication device S2 communicates via this communication device S4 with the communication network PDN. Naturally, it is possible that the communication device S4 communicates with the PDN network only via this gateway server S4 for routing multimedia information into the communication network, such as the PDN network and further to the subscriber. Thus, the server S4 can be used also as a filtering proxy S4 in the communication network, whereby the filtering proxy S4, on the basis of subscriber data, filters multimedia information to be transmitted from the communication device S2 in a way that information comprising content material of a selected type is filtered out, or that its transmission in the communication network is totally prevented. Moreover, it is obvious that *e.g.* the operation according to the example is possible also with communication devices communicating with the PSTN network.

The above description has discussed the application of the method of the invention in communication primarily between a mobile station registered in a PLMN network and a communication device in a PSTN network or a PDN network, but it is obvious that the invention can also be applied between a communication device using multimedia services and another communication device using multimedia services in a PSTN network or a PDN network. With reference to Fig. 1, one such communication device using services is a communication device S3 consisting of *e.g.* a telecommunication terminal TE3 and a data processor PC3. In this case, the communication device S3 is located in the same PSTN network with the communication device S1, but it can also be located in another PSTN network or the like. The inquiry and transmission of parameter data takes place *e.g.* by means of intelligent network protocol definitions or the IP protocol definition and *e.g.* MM_CAPABILITIES and MM_CAPABILITIES_ACKNOWLEDGE messages. The above-mentioned advantageous embodiments of the invention can be applied in data transmission between the communication device S3 and the communication device S1 offering multimedia services for example in a way that one mobile station MS1―MS4 of the PLMN network corresponds to the communication device S3 of a landline network and the mobile services switching centre MSC1 corresponds to the communication device transmitting calls in the landline network, such as a telephone switching centre which the communication device S3 contacts for setting up a data transmission connection with the communication device S1. Thus, data transmission between the communication devices takes place by using a landline cable network.

It is obvious to a man skilled in the art that the invention is not limited solely to the examples presented above but the embodiments of the invention can vary within the scope of the claims below.

## Claims

1. A method for data transmission between communication devices (MS1-MS4, S1-S4) in a communication network, the method comprising:
- setting up of a data transmission connection between a first communication device (MS1-MS4, S3) and a server (S1, S2, S4),
**characterized by:**
- transmitting parameter data describing the multimedia properties of the first communication device (MS1-MS4, S3) from the first communication device (MS1-MS4, S3) to the communication network,
- storing said parameter data in the server (S1, S2, S4) or in a network element (MSC, VLR, HLR, SGSN) of said communication network functionally connected to the server (S1, S2, S4),
- modifying, in the server (S1, S2, S4), the multimedia information to be transmitted to the first communication device (MS1-MS4, S3) on the basis of said stored parameter data, to be in accordance with the multimedia properties of the first communication device (MS1-MS4, S3), the multimedia information being graphic, audio, video or presentation format information, and
- carrying out the modifying of subsequent transmissions of multimedia information to the first communication device (MS1-MS4, S3) on the basis of the same parameter data, until updated parameter data is received from the first communication device (MS1-MS4, S3).

2. The method according to claim 1, **characterised in that** said parameter data describe one or more of the following properties:
parameters of the display of the communication device, image coding methods supported by the communication device and their parameters, video coding methods supported by the communication device and their parameters, audio coding methods supported by the communication device and their parameters, service-specific data transmission rate, service-specific data transmission mode, maximum data transmission rate of the data transmission mode, maximum size of the graphic files, number of colours of the graphics, properties of the keypad of the communication device, properties of the control device of the communication device, and INTERNET presentation modes.

3. The method according to claim 1 or 2, **characterised by** in response to storing said parameter data in a network element (MSC, VLR, HLR, SGSN) of said communication network:
- retrieving the parameter data from said network element, and
- transmitting the parameter data to said server for carrying out the modifying of a transmission of multimedia information.

4. The method according to claim 1 or 2, **characterised by** in response to storing said parameter data in a network element (MSC, VLR, HLR, SGSN) of said communication network:
- inquiring, by said server, the network element to transmit the parameter data to said server for carrying out the modifying of a transmission of multimedia information.

5. The method according to any of the claims 1 to 4, **characterised by**:
- determining a necessary optimisation for the multimedia information to be transmitted to the first communication device (MS1-MS4, S3) to correspond with said parameter data.

6. The method according to any of the claims 1 to 5, **characterised in that** the first communication device (MS1-MS4, S3) is a mobile station (MS1-MS4), such as a mobile phone, communicator, wireless multimedia communication device.

7. The method according to any of the claims 1 to 6, **characterised in that** multimedia information to be transmitted to the first communication device (MS1-MS4, S3) is originated from said server (S1, S2, S4) or from a second communication device, said second communication device being a mobile terminal (MS1-MS4) or another server (S1 - S4) connected to the communication network.

8. The method according to claim 7, **characterised by**:
- converting the multimedia information to be transmitted in the second communication device to correspond to the coding method, data transmission rate, data transmission mode, or device input mode used by at least the first communication device (MS1-MS4, S3).

9. The method according to any of the claims 1 to 8, **characterised by**:
- transmitting the parameter data to at least a mobile services switching centre (MSC1) or a serving support node (SGSN1) of a mobile communication network (PLMN)..

10. The method according to claim 9, **characterised by**:
- transmitting the parameter data to the server (S1, S2, S4) by means of a common protocol definition between the mobile services switching centre (MSC1) and the server (S1, S2, S4).

11. The method according to claim 9, **characterised by**
- transmitting the parameter data from the first communication device (MS1-MS4) at least in connection with mobile initiated call messaging, mobile terminated call messaging, mobile registration messaging, messaging for informing about the change of the parameter data of the mobile station (MS1-MS4), or messaging for inquiring the parameter data by the mobile services switching centre (MSC1).

12. The method according to any of the claims 9 - 11, **characterised by**:
- transmitting the parameter data from the first communication device (MS1-MS4) in a CLASSMARK information element or in a CLASSMARK_CHANGE message.

13. A mobile station for communication between a communication device (S1, S2, S4) and the mobile station (MS1-MS4) in a communication network, the mobile station (MS1-MS4) comprising:
- means (5, 12) for setting up a data transmission connection to the communication device (S1, S2, S4),
**characterised in that** the mobile station (MS1-MS4) further comprises:
- means (5, 9, 14) for storing parameter data of the mobile station (MS1-MS4), which parameter data describes the multimedia properties of said mobile station (MS1-MS4) to utilize multimedia information, the multimedia information being graphic, audio, video or presentation format information to be modified on the basis of said parameter data, and
- means (5, 12) for transmitting said parameter data from the mobile station (MS1-MS4) to the communication network.

14. A communication device (S1, S2, S4) for communication in a communication network, the communication device (S1, S2, S4) comprising:
- means (TE1, TE2, TE4, SERVER1, SERVER2, GS1) for setting up a data transmission connection between the communication device (S1, S2, S4) and a second communication device (MS1-MS4, S3),
**characterised in that** the communication device (S1, S2, S4) further comprises:
- means (TE1, TE2, TE4, SERVER1, SERVER2, GS1) for receiving parameter data from the communication network, which parameter data describes the multimedia properties of said second communication device (MS1-MS4, S3) to utilize multimedia information,
- means for storing said parameter data,
- means (TE1, TE2, TE4, SERVER1, SERVER2, GS1) for converting the multimedia information to be transmitted to said second communication device (MS1-MS4, S3) on the basis of the parameter data, to be in accordance with the multimedia properties of the second communication device (MS1-MS4, S3), wherein the multimedia information is graphic, audio, video or presentation format information,
- the communication device being arranged to carry out the modifying of subsequent transmissions of multimedia information to the second communication device (MS1-MS4, S3) on the basis of the same parameter data, until updated parameter data is received from the second communication device (MS1-MS4, S3).

15. The communication device according to claim 14, **characterised in that**:
- the communication device (S1, S2, S4) is arranged in functional connection with at least one of the following: a PDN network, a PSTN network, a communication network gateway server (S4), a mobile services switching centre (MSC1, MSC2) in the mobile communication network (PLMN), a support node (SGSN1, GGSN1) of the mobile communication network, and that
- the communication device (S1, S2, S4) is a server (S1, S2, S4) offering multimedia services.

16. The communication device according to claim 14 or 15, **characterised in that:**
- the communication device is arranged, in response to said parameter data being stored in a network element (MSC, VLR, HLR, SGSN) of said communication network, to inquire the network element to transmit the parameter data to said communication device for carrying out the modifying of a transmission of multimedia information.

17. The communication device according to any of the claims 14 to 16, **characterised in that**:
- the communication device is arranged to determine a necessary optimisation for the multimedia information to be transmitted to the communication device (MS1-MS4, S3) to correspond with said parameter data.

## Patentansprüche

1. Verfahren zur Übertragung von Daten zwischen Kommunikationsgeräten (MS1-MS4, S1-S4) in einem Kommunikationsnetzwerk, wobei das Verfahren umfasst:
Einrichten einer Datenübertragungsverbindung zwischen einem ersten Kommunikationsgerät (MS1-MS4, S3) und einem Server (S1, S2, S4),
**gekennzeichnet durch**:
Übertragen von die Multimediaeigenschaften des ersten Kommunikationsgeräts (MS1-MS4, S3) beschreibenden Parameterdaten von dem ersten Kommunikationsgerät (MS1-MS4, S3) an das Kommunikationsnetzwerk,
Speichern der Parameterdaten im Server (S1, S2, S4) oder in einem Netzwerkelement (MSC, VLR, HLR, SGSN) des mit dem Server (S1, S2, S4) funktionell verbundenen Kommunikationsnetzwerks,
Modifizieren der Multimediainformation im Server (S1, S2, S4), die auf Basis der gespeicherten Parameterdaten an das erste Kommunikationsgerät (MS1-MS4, S3) zu übertragen ist und den Multimediaeigenschaften des ersten Kommunikationsgeräts (MS1 - MS4, S3) entsprechen muss, wobei die Multimediainformation Grafik-, Audio-, Video- oder Präsentationsformatinformation ist, und
Durchführen des Modifizierens nachfolgender Übertragungen von Multimediainformation an das erste Kommunikationsgerät (MS1 - MS4, S3) auf Basis der gleichen Parameterdaten, bis die aktualisierten Parameterdaten vom ersten Kommunikationsgerät (MS1-MS4, S3) empfangen wurden.

2. Verfahren nach Anspruch 1, **dadurch gekennzeichnet, dass** die Parameterdaten eine oder mehrere der folgenden Eigenschaften beschreiben:
Parameter der Anzeige des Kommunikationsgeräts, vom Kommunikationsgerät unterstützte Bildkodierungsverfahren und deren Parameter, vom Kommunikationsgerät unterstützte Videokodierungsverfahren und deren Parameter, vom Kommunikationsgerät unterstützte Audiokodierungsverfahren und deren Parameter, dienstspezifische Datenübertragungsgeschwindigkeit, dienstspezifischer Datenübertragungsmodus, maximale Datenübertragungsgeschwindigkeit des Datenübertragungsmodus, maximale Größe der Grafikdateien, Anzahl der Farben der Grafiken, Eigenschaften des Tastenfeldes des Kommunikationsgeräts, Eigenschaften des Steuergeräts des Kommunikationsgeräts und INTERNET-Präsentationsmodi.

3. Verfahren nach Anspruch 1 oder 2, **gekennzeichnet durch**, in Reaktion auf das Speichern der Parameterdaten in einem Netzwerkelement (MSC, VLR, HLR, SGSN) des Kommunikationsnetzwerks,
- Abrufen der Parameterdaten von dem Netzwerkelement, und
- Übertragen der Parameterdaten an den Server zum Durchführen des Modifizierens einer Übertragung von Multimediainformation.

4. Verfahren nach Anspruch 1 oder 2, **gekennzeichnet durch**, in Reaktion auf das Speichern der Parameterdaten in einem Netzwerkelement (MSC, VLR, HLR, SGSN) des Kommunikationsnetzwerks,
- Auffordern des Netzwerkelements **durch** den Server, die Parameterdaten an den Server übertragen, um das Modifizieren einer Übertragung von Multimediainformation durchzuführen.

5. Verfahren nach einem der Ansprüche 1 bis 4, **gekennzeichnet durch**
- Bestimmen einer notwendigen Optimierung, damit die an das erste Kommunikationsgerät (MS1 - MS4, S3) zu übertragende Multimediainformation den Parameterdaten entspricht.

6. Verfahren nach einem der Ansprüche 1 bis 5, **dadurch gekennzeichnet, dass** das erste Kommunikationsgerät (MS1-MS4, S3) eine Mobilstation (MS1-MS4), wie ein Mobiltelefon, ein Kommunikationsgerät (communicator), ein drahtloses Multimediakommunikationsgerät ist.

7. Verfahren nach einem der Ansprüche 1 bis 6, **dadurch gekennzeichnet, dass** die an das erste Kommunikationsgerät (MS1 - MS4, S3) zu übertragende Multimediainformation im Server (S1, S2, S4) oder einem zweiten Kommunikationsgerät erzeugt wurde, wobei das zweite Kommunikationsgerät ein Mobilterminal (MS1 - MS4) oder ein anderer an das Kommunikationsnetzwerk angeschlossener Server (S1 - S4) ist.

8. Verfahren nach Anspruch 7, **gekennzeichnet durch**
- Umwandeln der zu übertragenden Multimediainformation im zweiten Kommunikationsgerät (S1, S2, S4), um der Kodierungsmethode, der Datenübertragungsgeschwindigkeit, dem Datenübertragungsmodus oder dem mindestens im ersten Kommunikationsgerät (MS1 - MS4, S3) verwendeten Geräteeingabemodus zu entsprechen.

9. Verfahren nach einem der Ansprüche 1 bis 8, **gekennzeichnet durch**
- Übertragen der Parameterdaten an mindestens eine Mobilfunkvermittlungszentrale (MSC1) oder einen verwaltenden Unterstützungsknoten (SGSN1) eines mobilen Kommunikationsnetzwerks (PLMN).

10. Verfahren nach Anspruch 9, **gekennzeichnet durch**
- Übertragen der Parameterdaten an den Server (S1, S2, S4) mittels einer gemeinsamen Protokolldefinition zwischen der Mobilfunkvermittlungszentrale (MSC1) und dem Server (S1, S2, S4).

11. Verfahren nach Anspruch 9, **gekennzeichnet durch**
- Übertragen der Parameterdaten von dem ersten Kommunikationsgerät (MS1 - MS4) mindestens in Verbindung mit von mobiler Seite initiierter Anrufnachrichtenübermittlung (Call Messaging), von mobiler Seite beendeter Anrufnachrichtenübermittlung (Call Messaging),
Registrierungsinformationsübermittlung (registration Messaging) von mobiler Seite,
Nachrichtenübermittlung (Messaging) zur Mitteilung von Änderungen an den Parameterdaten der Mobilstation (MS1 - MS4) oder
Nachrichtenübermittlung (Messaging) zur Abfrage der Parameterdaten **durch** die Mobilfunkvermittlungszentrale (MSC1).

12. Verfahren nach einem der Ansprüche 9 - 11, **gekennzeichnet durch**
- Übertragen der Parameterdaten vom ersten Kommunikationsgerät (MS1 - MS4) in einem CLASSMARK Informationselement oder einer CLASSMARK_CHANGE Nachricht.

13. Mobilstation zur Kommunikation zwischen einem Kommunikationsgerät (S1, S2, S4) und der Mobilstation (MS1 - MS4) in einem Kommunikationsnetzwerk, wobei die Mobilstation (MS1 - MS4) umfasst:
- Mittel (5, 12) zum Einrichten einer Datenübertragungsverbindung zu dem Kommunikationsgerät (S1, S2, S4),
**dadurch gekennzeichnet, dass** die Mobilstation (MS1 - MS4) ferner umfasst:
- Mittel (5, 9, 14) zum Speichern von Parameterdaten der Mobilstation (MS1 - MS4), die deren Multimediaeigenschaften der Mobilstation (MS1 - MS4) zur Nutzung der Multimediainformation beschreiben, wobei die Multimediainformation Grafik-, Audio-, Video- oder Präsentationsformatinformation ist, die auf Basis der Parameterdaten zu modifizieren ist, und
- Mittel (5, 12) zur Übertragung der Parameterdaten von der Mobilstation (MS1 - MS4) an das Kommunikationsnetzwerk.

14. Kommunikationsgerät (S1, S2, S4) zur Kommunikation in einem Kommunikationsnetzwerk, wobei das Kommunikationsgerät (S1, S2, S4) umfasst:
- Mittel (TE1, TE2, TE4, SERVER1, SERVER2, GS1) zum Einrichten einer Datenübertragungsverbindung zwischen dem Kommunikationsgerät (S1, S2, S4) und einem zweiten Kommunikationsgerät (MS1 - MS4, S3),
**dadurch gekennzeichnet, dass** das Kommunikationsgerät (S1, S2, S4) weiterhin umfasst:
- Mittel (TE1, TE2, TE4, SERVER1, SERVER2, GS1) zum Empfangen von Parameterdaten vom Kommunikationsnetzwerk, welche Parameterdaten die Multimediaeigenschaften des zweiten Kommunikationsgeräts (MS1 - MS4, S3) zur Nutzung von Multimediainformation beschreiben,
- Mittel zum Speichern der Parameterdaten,
- Mittel (TE1, TE2, TE4, SERVER1, SERVER2, GS1) zum Umwandeln der Multimediainformation, die an das zweite Kommunikationsgerät (MS1 - MS4, S3) auf Basis der Parameterdaten zu übertragen ist und den Multimediaeigenschaften des zweiten Kommunikationsgeräts (MS1 - MS4, S3) entsprechen muss, wobei die Multimediainformation Grafik-, Audio-, Video- oder Präsentationsformatinformation ist,
- das Kommunikationsgerät darauf eingerichtet ist, das Modifizieren nachfolgender Übertragungen von Multimediainformation an das zweite Kommunikationsgerät (MS1 - MS4, S3) auf Basis der gleichen Parameterdaten durchzuführen, bis die aktualisierten Parameterdaten vom zweiten Kommunikationsgerät (MS1 - MS4, S3) empfangen wurden.

15. Kommunikationsgerät nach Anspruch 14, **dadurch gekennzeichnet, dass**
- das Kommunikationsgerät (S1, S2, S4) auf die funktionelle Verbindung mit mindestens einem der folgenden eingerichtet ist: einem PDN Netzwerk, einem PSTN Netzwerk, einem Kommunikationsnetzwerk Gateway Server (S4), einer Mobilfunkvermittlungszentrale (MSC1, MSC2) im mobilen Kommunikationsnetzwerk (PLMN), einem Unterstützungsknoten (SGSN1, GGSN1) des mobilen Kommunikationsnetzwerks und dass
- das Kommunikationsgerät (S1, S2, S4) ein Server (S1, S2, S4) ist, der Multimediadienste anbietet.

16. Kommunikationsgerät nach Anspruch 14 oder 15, **dadurch gekennzeichnet, dass**
- das Kommunikationsgerät darauf eingerichtet ist, in Reaktion auf die in einem Netzwerkelement (MSC, VLR, HLR, SGSN) des Kommunikationsnetzwerks gespeicherten Parameterdaten das Netzwerkelement aufzufordern, die Parameterdaten an das Kommunikationsgerät zu übertragen, um das Modifizieren einer Übertragung von Multimediainformation durchzuführen.

17. Kommunikationsgerät nach einem der Ansprüche 14 bis 16, **dadurch gekennzeichnet, dass**
- das Kommunikationsgerät darauf eingerichtet ist, eine notwendige Optimierung für die an das Kommunikationsgerät (MS1 - MS4, S3) zu übertragende Multimediainformation zu bestimmen, damit sie den Parameterdaten entspricht.

## Revendications

1. Procédé de transmission de données entre des dispositifs de communication (MS1-MS4, S1-S4) dans un réseau de communication, le procédé comprenant :
- l'établissement d'une connexion de transmission de données entre un premier dispositif de communication (MS1-MS4, S3) et un serveur (S1, S2, S4),
**caractérisé par** :
- la transmission de données de paramètres décrivant les propriétés multimédia du premier dispositif de communication (MS1-MS4, S3), du premier dispositif de communication (MS1-MS4, S3) au réseau de communication,
- la mémorisation desdites données de paramètres dans le serveur (S1, S2, S4) ou dans un élément de réseau (MSC, VLR, HLR, SGSN) dudit réseau de communication fonctionnellement connecté au serveur (S1, S2, S4),
- la modification, dans le serveur (S1, S2, S4), des informations multimédia devant être transmises au premier dispositif de communication (MS1-MS4, S3) sur la base desdites données de paramètres mémorisées, pour qu'elles soient en conformité avec les propriétés multimédia du premier dispositif de communication (MS1-MS4, S3), les informations multimédia étant des informations au format graphique, audio, vidéo ou de présentation, et
- l'exécution de la modification de transmissions subséquentes des informations multimédia au premier dispositif de communication (MS1-MS4, S3) sur la base des mêmes données de paramètres, jusqu'à ce que des données de paramètres mises à jour soient reçues dudit premier dispositif de communication (MS1-MS4, S3).

2. Procédé selon la revendication 1, **caractérisé en ce que** lesdites données de paramètres décrivent une ou plusieurs des propriétés suivantes : paramètres de l'affichage du dispositif de communication, procédés de codage d'image supportés par le dispositif de communication et leurs paramètres, procédés de codage vidéo supportés par le dispositif de communication et leurs paramètres, procédés de codage audio supportés par le dispositif de communication et leurs paramètres, vitesse de transmission de données spécifiques de service, mode de transmission de données spécifiques de service, vitesse maximum de transmission de données du mode de transmission de données, taille maximum des fichiers graphiques, nombre de couleurs des graphiques, propriétés du clavier du dispositif de communication, propriétés du dispositif de commande du dispositif de communication, et modes de présentation INTERNET.

3. Procédé selon la revendication 1 ou 2, **caractérisé par**, en réponse à la mémorisation desdites données de paramètres dans un élément de réseau (MSC, VLR, HLR, SGSN) dudit réseau de communication :
- la récupération des données de paramètres dudit élément de réseau, et
- la transmission des données de paramètres audit serveur pour exécuter la modification d'une transmission d'informations multimédia.

4. Procédé selon la revendication 1 ou 2, **caractérisé par**, en réponse à la mémorisation desdites données de paramètres dans un élément de réseau (MSC, VLR, HLR, SGSN) dudit réseau de communication :
- la demande, par ledit serveur, à l'élément de réseau de transmettre les données de paramètres audit serveur pour exécuter la modification d'une transmission d'informations multimédia.

5. Procédé selon l'une quelconque des revendications 1 à 4, **caractérisé par** :
- la détermination d'une optimisation nécessaire pour que les informations multimédia devant être transmises au premier dispositif de communication (MS1-MS4, S3) correspondent auxdites données de paramètres.

6. Procédé selon l'une quelconque des revendications 1 à 5, **caractérisé en ce que** le premier dispositif de communication (MS1-MS4, S3) est une station mobile (MS1-MS4), telle qu'un téléphone mobile, un communicateur, un dispositif de communication multimédia sans fil.

7. Procédé selon l'une quelconque des revendications 1 à 6, **caractérisé en ce que** les informations multimédia devant être transmises au premier dispositif de communication (MS1-MS4, S3) proviennent dudit serveur (S1, S2, S4) ou d'un deuxième dispositif de communication, ledit deuxième dispositif de communication étant un terminal mobile (MS1-MS4) ou un autre serveur (S1-S4) connecté au réseau de communication.

8. Procédé selon la revendication 7, **caractérisé par** :
- la conversion des informations multimédia devant être transmises dans le deuxième dispositif de communication afin qu'elles correspondent au procédé de codage, à la vitesse de transmission de données, au mode de transmission de données, ou au mode d'entrée de dispositif utilisés par au moins le premier dispositif de communication (MS1-MS4, S3).

9. Procédé selon l'une quelconque des revendications 1 à 8, **caractérisé par** :
- la transmission des données de paramètres à au moins un centre de commutation de services mobiles (MSC1) ou à un noeud de support de desserte (SGSN1) d'un réseau de communication mobile (PLMN).

10. Procédé selon la revendication 9, **caractérisé par** :
- la transmission des données de paramètres au serveur (S1, S2, S4) au moyen d'une définition commune de protocole entre le centre de commutation de services mobiles (MSC1) et le serveur (S1, S2, S4).

11. Procédé selon la revendication 9, **caractérisé par** :
- la transmission des données de paramètres du premier dispositif de communication (MS1-MS4) au moins en connexion avec un message d'appel lancé par un mobile, un message d'appel terminé par un mobile, un message d'enregistrement de mobile, un message d'information relatif au changement des données de paramètres de la station mobile (MS1-MS4), ou un message de demande des données de paramètres par le centre de commutation de services mobiles (MSC1).

12. Procédé selon l'une quelconque des revendications 9 à 11, **caractérisé par** :
- la transmission des données de paramètres du premier dispositif de communication (MS1-MS4) dans un élément d'information CLASSMARK ou dans un message CLASSMARK__CHANGE.

13. Station mobile pour une communication entre un dispositif de communication (S1, S2, S4) et la station mobile (MS1-MS4) dans un réseau de communication, la station mobile (MS1-MS4) comprenant :
- un moyen (5, 12) pour établir une connexion de transmission de données vers le dispositif de communication (S1, S2, S4),
**caractérisée en ce que** la station mobile (MS1-MS4) comprend en outre :
- un moyen (5, 9, 14) pour mémoriser des données de paramètres de la station mobile (MS1-MS4), lesquelles données de paramètres décrivent les propriétés multimédia de ladite station mobile (MS1-MS4) de façon à utiliser des informations multimédia, les informations multimédia étant des informations au format graphique, audio, vidéo ou de présentation devant être modifiées sur la base desdites données de paramètres, et
- un moyen (5, 12) pour transmettre lesdites données de paramètres de la station mobile (MS1-MS4) au réseau de communication.

14. Dispositif de communication (S1, S2, S4) pour une communication dans un réseau de communication, le dispositif de communication (S1, S2, S4) comprenant :
- un moyen (TE1, TE2, TE4, SERVER1, SERVER2, GS1) pour établir une connexion de transmission de données entre le dispositif de communication (S1, S2, S4) et un deuxième dispositif de communication (MS1-MS4, S3),
**caractérisé en ce que** le dispositif de communication (S1, S2, S4) comprend en outre :
- un moyen (TE1, TE2, TE4, SERVER1, SERVER2, GS1) pour recevoir des données de paramètres du réseau de communication, lesquelles données de paramètres décrivent les propriétés multimédia dudit deuxième dispositif de communication (MS1-MS4, S3) de façon à utiliser des informations multimédia,
- un moyen pour mémoriser lesdites données de paramètres,
- un moyen (TE1, TE2, TE4, SERVER1, SERVER2, GS1) pour convertir les informations multimédia devant être transmises audit deuxième dispositif de communication (MS1-MS4, S3) sur la base des données de paramètres, pour qu'elles soient en conformité avec les propriétés multimédia du deuxième dispositif de communication (MS1-MS4, S3), dans lequel les informations multimédia sont des informations au format graphique, audio, vidéo ou de présentation,
- le dispositif de communication étant agencé de façon à exécuter la modification de transmissions subséquentes d'informations multimédia au deuxième dispositif de communication (MS1-MS4, S3) sur la base des mêmes données de paramètres, jusqu'à ce que des données de paramètres mises à jour soient reçues du deuxième dispositif de communication (MS1-MS4, S3).

15. Dispositif de communication selon la revendication 14, **caractérisé en ce que** :
- le dispositif de communication (S1, S2, S4) est agencé en connexion fonctionnelle avec au moins l'un des suivants : un réseau PDN, un réseau PSTN, un serveur de passerelle de réseau de communication (S4), un centre de commutation de services mobiles (MSC1, MSC2) dans le réseau de communication mobile (PLMN), un noeud de support (SGSN1, GGSN1) du réseau de communication mobile, et **en ce que**
- le dispositif de communication (S1, S2, S4) est un serveur (S1, S2, S4) proposant des services multimédia.

16. Dispositif de communication selon la revendication 14 ou 15, **caractérisé en ce que** :
- le dispositif de communication est agencé, en réponse auxdites données de paramètres mémorisées dans un élément de réseau (MSC, VLR, HLR, SGSN) dudit réseau de communication, de façon à demander à l'élément de réseau de transmettre les données de paramètres audit dispositif de communication pour exécuter la modification d'une transmission d'informations multimédia.

17. Dispositif de communication selon l'une quelconque des revendications 14 à 16, **caractérisé en ce que** :
- le dispositif de communication est agencé pour déterminer une optimisation nécessaire pour que les informations multimédia devant être transmises au dispositif de communication (MS1-MS4, S3) correspondent avec lesdites données de paramètres.
